# EUROPÄISCHE PATENTSCHRIFT

(11) **EP 2 030 433 B1**
(45) Veröffentlichungstag und Bekanntmachung des Hinweises auf die Patenterteilung: **20.06.2018**
(21) Anmeldenummer: 07729519.4
(22) Anmeldetag: 25.05.2007
(51) Int. Cl.: H04N 5/232, G06T 3/40

(54) **VERFAHREN UND ANORDNUNG ZUR BEHANDLUNG VON DATENSÄTZEN BILDGEBENDER SENSOREN SOWIE EIN ENTSPRECHENDES COMPUTERPROGRAMM UND EIN ENTSPRECHENDES COMPUTERLESBARES SPEICHERMEDIUM**
METHOD AND ARRANGEMENT FOR PROCESSING RECORDS OF IMAGING SENSORS, CORRESPONDING COMPUTER PROGRAM, AND CORRESPONDING COMPUTER-READABLE STORAGE MEDIUM
PROCÉDÉ ET SYSTÈME DE TRAITEMENT D'ENREGISTREMENTS DE DONNÉES DE CAPTEURS DE FORMATION D'IMAGES, AINSI QUE PROGRAMME INFORMATIQUE CORRESPONDANT ET SUPPORT D'ENREGISTREMENT CORRESPONDANT POUVANT ÊTRE LU INFORMATIQUEMENT

(30) Priorität: 29.05.2006 DE 102006025651; 02.02.2007 DE 102007005998
(43) Veröffentlichungstag der Anmeldung: 04.03.2009
(73) Patentinhaber: HERE Global B.V., 5611 ZT Eindhoven (NL)
(72) Erfinder: BRENNER, Thomas, 10437 Berlin (DE); BATTKE, Henrik, 10115 Berlin (DE); GAEBLER, Frank, 10557 Berlin (DE)
(74) Vertreter: Cohausz & Florack
(86) Internationale Anmeldenummer: PCT/EP2007/055090
(87) Internationale Veröffentlichungsnummer: WO 2007/138007

(56) Entgegenhaltungen:
- EP-A1- 1 553 521
- WO-A-98/34195
- WO-A-99/51027
- WO-A-2006/041443
- US-A- 6 018 349
- US-A- 6 075 905
- US-A1- 2001 026 684
- US-A1- 2005 168 594
- US-A1- 2006 050 152
- CHIAO WANG ET AL: "Adaptive parallax control for multi-view stereo panoramas", PROCEEDINGS SPIE, vol. 6055, 2 February 2006 (2006-02-02), XP055264139, US ISSN: 0277-786X, DOI: 10.1117/12.641508 ISBN: 978-1-62841-832-3
- HSU S ET AL: "Automated mosaics via topology inference", IEEE COMPUTER GRAPHICS AND APPLICATIONS, IEEE SERVICE CENTER, NEW YORK, NY, US, vol. 22, no. 2, 1 March 2002 (2002-03-01), pages 44-54, XP011094240, ISSN: 0272-1716, DOI: 10.1109/38.988746

## Beschreibung

Die Erfindung betrifft ein Verfahren und eine Anordnung zur Behandlung von Datensätzen bildgebender Sensoren sowie ein entsprechendes Computerprogramm und ein entsprechendes computerlesbares Speichermedium, welche insbesondere einsetzbar sind für die Erstellung von Panoramafotos unter Verwendung von mobilen Endgeräten, wie beispielsweise einer Digitalkamera, eines Mobiltelefons oder dergleichen.

Geräte zur Erzeugung von Panoramafotos sind bereits bekannt. Allerdings werden bei den bekannten Lösungen stets besondere optische Einheiten eingesetzt, um die Motive in dem gewünschten Panoramaformat auf den optischen bzw. bildgebenden Sensor, beispielsweise einen (analogen) Film oder ein CCD-Chip, abzubilden. Die hierfür eingesetzten optischen Einheiten bedeuten aber stets einen zusätzlichen Aufwand an Material. Darüber hinaus entstehen, insbesondere bei qualitativ hochwertigen Geräten oder bei Geräten, mit denen extrem weite Winkel aufgenommen werden können, zum Teil erhebliche zusätzliche Kosten.

Andere bekannte Verfahren, besonders die in Digitalkameras zum Einsatz kommenden, erfordern vom Nutzer die manuelle überlappende Positionierung und Ausrichtung der Kamera, damit die Bilder anschließend teils automatisch oft aber mit manueller Korrektur zusammengeführt werden können. Die besseren Verfahren zeigen dem Nutzer z.B. noch halbtransparent ein vertikalen Streifen vom letzten Bild, um die Positionierung zu erleichtern. Bei schwierigen Szenen mit ähnlichen Objekten z.B. einer Felsenwand ist dies häufig trotzdem problematisch.

Eine weitere praktizierte Möglichkeit ist die Aufnahme eines Videos, aus dem dann im Nachhinein das Panorama durch Bildanalyse extrahiert wird. Diese erfordert jedoch das Speichern von sehr vielen Datensätzen im beschränkt großen Speicher, was mit höheren Auflösungen schnell auf Grenzen, speziell bei Kleinstgeräten wie Digitalkameras und Handys, stößt und auch qualitative Einbußen mit sich bringt, da Videoaufnahmen in der Regel schlechtere Qualität für einzelne Bilder des Videos liefern. Während der Aufnahme kann nicht entschieden werden, welche Bilder für ein Panorama benötigt werden.

Eine weitere praktizierte Möglichkeit ist die Aufnahme und Speicherung vieler Einzelbilder, wobei der Speicherbedarf und die Verarbeitungszeit mit der Größe des Aufnahmewinkels und der Höhe der Auflösung und damit Qualität der einzelnen und zusammengesetzten Bilder steigt und die Kapazitäten von Kleinstgeräten übersteigt.

Beide Verfahren erlauben dem Nutzer keine Vorschau des entstehenden Bildes, sonder immer nur die Ansicht des aktuell aufzunehmenden Bildes/Datensatzes. Bereits aufgenommene Datensätze sind nicht sichtbar.

Die japanische Veröffentlichung JP 2006-135386 beschreibt ein Verfahren, bei welchem Videobilder mehrerer Kameras zu einer Panoramaaufnahme zusammengesetzt werden. Insbesondere werden dabei die Einzelbilder aller Kameras zu einer Panoramaaufnahme zusammengesetzt, die von den verschiedenen Kameras zur gleichen Zeit aufgenommen wurden. Eine Behandlung zeitlich aufeinanderfolgender Bilder ist in JP 2006-135386 nicht beschrieben.

Die Druckschrift "Adaptive parallax control for multi-view stereo panoramas" von Chiao Wang et al., Proceedings SPIE Bd. 6055, 2. Februar 2006 (2006-02-02), beschreibt die Generierung eines Stereo-Panoramapaars durch Zusammenfügen von Streifen, die aus Bildern ausgewählt werden, die mit einer Schwenkkamera eines Panoramabildgebungssystems aufgenommen wurden. Für das Zusammenfügen wird ein Algorithmus präsentiert, der unter anderem eine dynamische Belichtungsänderung korrigiert. In einer globalen Bildregistrierung werden alle aufgenommenen Bilder in einen Bezugsrahmen abgebildet. Hierbei wird die optimale Reihenfolge der Bilder bestimmt. Für das Zusammenfügen der Bilder wird ein Algorithmus verwendet, der auf einer Gaußschen Mischverteilung beruht, um eine dynamische Helligkeit auszugleichen. Für jeden Streifen mit dem gleichen Bildausschnitt in mehreren Bildern wird eine mittlere Helligkeitskomponente pro Pixel bestimmt, und daraus wird eine normale Wahrscheinlichkeitsdichte für alle Pixel in allen Bildern bestimmt. Daraus wiederum wird für jedes Pixel über alle Bilder eine Farbwahrscheinlichkeit bestimmt. Für das Pixel wird als ein Ausgangshelligkeitsniveau der Wert der Farbwahrscheinlichkeit bestimmt, der den maximalen Wahrscheinlichkeitsschätzwert aufweist.

Die Druckschrift "Automated mosaics via topology inference" von Hsu S. et al., IEEE Computer Graphics and Applications, IEEE Service Center, New York, NY, US, Bd. 22, Nr. 2, 1. März 2002 (2002-03-01), Seiten 44-54, beschreibt die automatische Generierung von Mosaiken aus Bildsequenzen mit überlappenden Rahmen. Die Rahmen werden auf der Mosaikoberfläche so platziert, dass alle benachbarten Rahmen akkurat ausgerichtet oder global konsistent sind. Wo zwei oder mehr Rahmen überlappen, besteht die Möglichkeit, Informationen von einem oder mehreren Rahmen zu nutzen. Aufgrund zeit- und raumabhängiger Kameraempfindlichkeit, wie AGC, kann die Erscheinung des gleichen Szenepunkts zwischen den Rahmen unterschiedlich sein. Um abrupte Änderungen in Farbe, Helligkeit oder Rauschen in dem Mosaik zu reduzieren, wird die Beitragswichtung der Bilder über eine gewisse Distanz um eine Voronoi-Grenze zwischen zwei Bildern variiert. Farb- und Helligkeitsverstärkungsänderungen sollten über eine große Distanz geglättet werden, feinere Details nur über eine geringe Distanz.

Die Druckschrift US 6,075,905 beschreibt eine Generierung eines Bildmosaiks, die ein Auswählen von Quellbildern, ein Ausrichten der Quellbilder, ein Auswählen von Quellsegmenten, ein Verbessern der Bilder, und ein Zusammenfügen der Bilder zum Bilden des Bildmosaiks umfasst. Bilder, die zusammengefügt werden sollen, können eine unterschiedliche Verstärkung aufweisen, z.B. weil sie mittels einer Videokamera mit automatischer Verstärkungsregelung aufgenommen wurden. Eine Verstärkungstransformation kann angenähert werden durch eine Multiplikation der Bildintensitäten. Um eine glatte Verstärkungstransformation zu erzielen, wird ein besseres optisches Angleichen erreicht, indem eine logarithmische Transformation auf die Bilder vor dem Zusammenfügen angewendet wird. Die transformierten Bilder werden zusammengefügt, und der Exponent der optisch angepassten, transformierten Bilder liefert das Endergebnis.

Die Druckschrift US 2005/0168594 A1 beschreibt Digitalkameras und Verfahren, die einem Nutzer helfen, aufeinanderfolgende Bilder akkurat auszurichten, um große Panoramabilder und zusammengesetzte Bilder zu erzeugen, die von einer Abfolge kleinerer Bilder hergeleitet werden.

Die Druckschrift EP 1 553 521 A1 beschreibt eine Bildverarbeitungsvorrichtung zum Generieren von Bilddaten, die 3b ein einziges nahtloses ebenes Bild repräsentieren, welches anhand mehrerer Sätze von Bilddaten, enthalten in einer Mehrzahl von Bilddateien, synthetisiert wird. Jede der Mehrzahl von Bilddateien umfasst Bilddaten, die sich aus einer Mehrzahl von Pixeln zusammensetzen, die in einer Fläche angeordnet sind, um ein flächiges Bild zu erzeugen. Die Bildverarbeitungsvorrichtung erzeugt eine ellipsenförmige oder zylindrische Projektionsfläche für die Synthese der mehreren Sätze von Bilddaten.

Die Aufgabe der Erfindung besteht darin, ein alternatives Verfahren und eine alternative Anordnung zur Behandlung von Datensätzen bildgebender Sensoren sowie ein entsprechendes Computerprogramm und ein entsprechendes computerlesbares Speichermedium bereitzustellen, welche Nachteile der bekannten Lösungen beheben sowie insbesondere die automatische Aufnahme von Panoramen ermöglichen, deren Aufnahmewinkel beliebig gewählt werden kann.

Die Aufgabe wird erfindungsgemäß durch die Merkmale in den Ansprüchen 1, 8, 12 und 13 gelöst. Zweckmäßige Ausgestaltungen der Erfindung sind in den Unteransprüchen enthalten.

Ein besonderer Vorteil der Erfindung besteht darin, dass Panoramafotos mit Geräten, wie beispielsweise Mobiltelefonen, aufgenommen werden können, die nicht über eine spezielle Panoramaoptik verfügen, sondern lediglich mit Linsen in Standardausführung ausgestattet sind. Diese Erweiterung der Aufnahmemöglichkeiten wird dadurch erreicht, dass bei dem erfindungsgemäßen Verfahren zur Behandlung von Datensätzen bildgebender Sensoren in schneller Abfolge nacheinander aufeinanderfolgende Datensätze eines bildgebenden Sensors von einer Datenverarbeitungseinheit wenigstens teilweise gelesen werden. Während weitere Datensätze der bildgebenden Sensoren ausgelesen werden, werden (vorzugsweise automatisch) bereits gelesene, vorangehende Datensätze analysiert, um einander entsprechende Bereiche innerhalb der gelesenen Datensätze zu ermitteln. Vorzugsweise werden die gelesenen Daten als Bilddaten analysiert, wobei in den Bilddatensätzen übereinstimmende Bildbereiche gesucht werden. Hierbei können alle geeigneten Verfahren der Bildverarbeitung genutzt werden. Auf Basis der ermittelten, einander entsprechenden Bereiche, d.h. der übereinstimmenden Bildbereiche, werden Datensätze mehrerer aufeinander folgender Datensätze nach und nach zu einem Gesamtbild zusammengefügt. Dieses Gesamtbild umfasst nun Daten, welche eine Szene abbilden, die größer ist als die durch einen einzigen Datensatz des bildgebenden Sensors abbildbare Szene. Vorteilhafterweise werden die das Gesamtbild erzeugenden Daten gemeinsam abgespeichert und/oder über Mittel zur Datenausgabe ausgegeben. Die Daten des Gesamtbildes können dabei visuell ausgegeben oder in Dateiform an andere Datenverarbeitungseinrichtungen, beispielsweise für eine Weiterverarbeitung, übertragen werden.

Vorzugsweise werden bei dem erfindungsgemäßen Verfahren vollständige Datensätze aus den bildgebenden Sensoren gelesen. Für die Analyse der Bilddaten können jedoch sehr geringe Auflösungen verwendet werden, so dass ein schnelles Lesen der Daten auch auf leistungsschwachen Geräten ermöglicht wird.

Eine Anordnung zur Behandlung von Datensätzen bildgebender Sensoren nach der Erfindung umfasst mindestens einen bildgebenden Sensor und mindestens eine Datenverarbeitungseinrichtung mit Speichermitteln oder mindestens einen bildgebenden Sensor, mindestens eine Datenverarbeitungseinrichtung mit Speichermitteln und mindestens ein Mittel zur Datenausgabe, wobei die Anordnung derart eingerichtet ist, dass mehrere aufeinanderfolgende Datensätze des mindestens einen bildgebenden Sensors zumindest teilweise ausgelesen werden, gelesene Datensätze analysiert werden, um einander entsprechende Bereiche innerhalb der gelesenen Datensätze zu ermitteln, und Datensätze mehrerer aufeinander folgender Datensätze (vorzugsweise eines einzigen bildgebenden Sensors) zusammen mit Informationen über einander entsprechende Bereiche in den Speichermitteln abgespeichert und/oder über Mittel zur Datenausgabe ausgegeben werden, wobei bei einer, vorzugsweise visuellen, Ausgabe Daten des mindestens einen bildgebenden Sensors zu einem Bild zusammengefügt werden. Bei einer visuellen Ausgabe werden vorzugsweise die Bilddatensätze auf einem Display dargestellt und das auf dem Display erscheinende Bild nach und nach durch Bilddaten nachfolgend ausgelesener Datensätze erweitert. In einer bevorzugten Ausführungsform der erfindungsgemäßen Anordnung ist vorgesehen, als bildgebenden Sensor einen CCD-Sensor (CCD = Charge Coupled Device) oder einen CMOS-Sensor (CMOS = Complementary Metal Oxide Semiconductor) einzusetzen.

Um die mit dem bildgebenden Sensor zu detektierenden Szenen in wohldefinierter Weise auf den bildgebenden Sensor abzubilden, ist in einer bevorzugten Ausführungsform der erfindungsgemäßen Anordnung vorgesehen, dem bildgebenden Sensor eine optische Einheit zur Abbildung von Szenen auf dem mindestens einen bildgebenden Sensor vorzuschalten. Vorzugsweise ist die optische Einheit als Linsensystem, beispielsweise als Kameraobjektiv, ausgebildet.

Es erweist sich darüber hinaus als vorteilhaft, wenn die erfindungsgemäße Anordnung eine Aktivierungseinheit umfasst, durch welche das Auslesen der Datensätze aus dem bildgebenden Sensor aktiviert werden kann. Eine solche Aktivierungseinheit kann bei einer Kamera oder einem Mobiltelefon mit Kamerafunktion beispielsweise als Auslöser ausgebildet sein.

Vorzugsweise umfassen die Mittel zur Datenausgabe auch Mittel zur visuellen Ausgabe von Daten des mindestens einen bildgebenden Sensors.

In einer bevorzugten Ausführungsform des erfindungsgemäßen Verfahrens ist vorgesehen, dass durch die Aktivierungseinheit eine Auslösefunktion aktiviert wird, und während einer dauerhaften Aktivierung der Auslösefunktion mehrere aufeinanderfolgende Datensätze des bildgebenden Sensors gelesen werden. Vorzugsweise werden die Datensätze bei aktivierter Auslösefunktion permanent gelesen, d.h. es werden einzelne Bilder in schneller Folge und sequentiell ausgelesen.

Eine bevorzugte Ausführungsform der erfindungsgemäßen Anordnung sieht vor, dass der mindestens eine bildgebende Sensor in ein mobiles Endgerät, beispielsweise eine Digitalkamera, einen Personal Digital Assistent (PDA) oder ein Mobiltelefon, integriert ist. Die Aktivierungseinheit ist in diesen Fällen der Auslöser. Solange der Auslöser gedrückt wird, werden Datensätze aus dem bildgebenden Sensor ausgelesen, analysiert und zu einem Gesamtbild zusammengefügt. Alternativ kann vorgesehen sein, dass der Auslösevorgang durch eine erste einmalige Betätigung der Aktivierungseinheit gestartet und durch eine zweite einmalige Betätigung der Aktivierungseinheit beendet wird. Zwischen dem Drücken und Loslassen der Aktivierungseinheit (Auslöser) bzw. zwischen der ersten und der zweiten einmaligen Betätigung der Aktivierungseinheit ist die Auslösefunktion aktiviert und Datensätze werden aus dem bildgebenden Sensor ausgelesen. Die Datensätze oder wenigstens ein Teil der Datensätze, die während einer solchen einmaligen dauerhaften Aktivierung der Auslösefunktion gelesen wurden, werden zu einem Gesamtbild zusammengefügt. Ein Panoramabild wird dann dadurch erzeugt, dass während des Lesens der Datensätze der bildgebende Sensor relativ zu einer zu detektierenden Szene bewegt wird. In dem Falle, dass der bildgebende Sensor in ein mobiles Endgerät, beispielsweise ein Mobiltelefon, eine Digitalkamera oder ein PDA integriert ist, wird ein solches Panoramabild erzeugt, indem das mobile Endgerät bei gedrückter Auslösefunktion geschwenkt wird, um die gewünschte Szene aufzunehmen. Zusammengesetzte Bilder in Art eines Panoramabildes kann man jedoch auch erhalten, indem man aus einem sich bewegenden Fahrzeug heraus fotografiert, ohne die Kamera zu bewegen. Es ist also nur nötig, dass sich bildgebender Sensor und zu detektierende Szene relativ zueinander bewegen.

In einer anderen bevorzugten Ausführungsform des erfindungsgemäßen Verfahrens ist vorgesehen, dass bei der Analyse der gelesenen Datensätze eine 2D-Transformation zwischen zwei aufeinanderfolgenden Bildern, d.h. zwischen zwei nacheinander ausgelesenen Bilddatensätzen, ermittelt wird. Vorzugsweise wird diese 2D-Transformation mittels 2D-Homographie oder einer projektiven Transformation ermittelt. Die projektive Transformation kann dabei in vereinfachter Form beispielsweise als Lukas-Kanade-Algorithmus ausgeführt werden. Vorteilhafterweise wird die Analyse der Datensätze permanent und/oder in Echtzeit (realtime) analysiert. Die Analyse liefert dabei vorteilhafterweise insbesondere auch Daten über den Ablauf der Bewegung des bildgebenden Sensors relativ zu der Szene z.B. über den optischen Fluss der sequentiell gelesenen Bilddatensätze.

In einer weiteren bevorzugten Ausführungsform des erfindungsgemäßen Verfahrens werden die Ergebnisse dieser Analyse dazu genutzt, um zu ermitteln, wann ein weiterer Datensatz für das zusammengesetzte Bild der Szene benötigt und gespeichert werden muss und/oder wie dieses Teilbild an die bereits gespeicherten Teilbilder anzufügen ist. Vorzugsweise erfolgt diese Ermittlung voll automatisch. Unter Teilbild wird hier ein Teil des (entstehenden) Panoramabildes verstanden.

In einer weiteren bevorzugten Ausführungsform der Erfindung ist vorgesehen, dass Datensätze unterschiedlicher Auflösung von dem bildgebenden Sensor gelesen werden. Die Analyse kann auch mit Datensätzen einer relativ geringen Auflösung durchgeführt werden. Deshalb werden hierfür auch nur Bilddaten mit geringer Auflösung gelesen. Wenn ein neuer Datensatz an bereits gespeicherte Daten angefügt werden soll, wird dieser Datensatz in höherer Auflösung gelesen (und gespeichert). Dieses Vorgehen führt zu einer schnelleren Verarbeitung, da die Analyse nur auf kleinen Datensätzen erfolgen muss; zudem wird für die Analyse weniger Speicher nötig.

Die Ermittlung, welches nächste Bild mit ausreichend überschneidenden Features angefügt werden muss, erfolgt wie beschrieben, jedoch werden bis zu einem solchen anzufügenden Bild nur gering aufgelöste Daten vom Bildsensor (z.B. so genannte "Viewfinder Frames") gelesen. Erst wenn ein weiteres Bild angefügt werden muss, wird ein Bild mit verbesserter, vorzugsweise vollständiger Aufnahmesteuerung (z.B. Belichtungsmessung, Weißabgleich, Blitz ...) gelesen. Bei einer Aufzeichnung mit verbesserter Aufnahmesteuerung werden in Abhängigkeit der Nutzeranforderungen und/oder Szeneneigenschaften (Lichtverhältnisse o.dgl.) bei der Aufzeichnung eines an das entstehende Panoramabild anzufügenden Bildes zusätzliche Parameter, wie z.B. Belichtungsmessung, Weißabgleich, Blitz oder andere, berücksichtigt. Diese Parameter werden bei jeder Aufnahme vom Kamerasystem neu bestimmt, alternativ können diese Parameter auch für Aufnahmen fest voreingestellt sein.

Da die Aufnahme eines Bildes mit verbesserter bzw. vorzugsweise vollständiger Aufnahmesteuerung in der Regel, je nach Kameratyp mit kurzen oder längeren Verzögerungen behaftet ist, kann der Nutzer über eine Audio- und/oder visuelle Rückmeldung zum Stoppen der Bewegung aufgefordert werden.

In einer bevorzugten Ausführungsform wird das Stoppen der Bewegung über die bereits gemessenen Parameter geprüft und die Aufnahme erst dann ausgeführt.

Ist die Aufnahme erfolgt, wird die Vorschau auf dem Display entsprechend aktualisiert und der Nutzer per Audio und/ oder visueller Darstellung aufgefordert, die Bewegung fortzusetzen. Das Innehalten/Stoppen der Bewegung hat weiterhin die Vorteile, dass:
a) die Bewegung bis zum Stoppen schneller erfolgen kann und
b) dass in Abhängigkeit von Bildsensor und Objektiv sowie Szeneneigenschaften (z.B. Helligkeit und Entfernung) mögliche Bewegungsunschärfen gänzlich vermieden werden;
c) ein Blitz ausgelöst werden könnte.

Das Stoppen der Bewegung und das Aufnehmen eines Bildes mit verbesserter Aufnahmesteuerung unter Berücksichtigung zusätzlicher Parametern bietet weiterhin folgende Vorteile:
a) Es ist möglich, Bilddaten aufzunehmen, die erst später zusammengefügt werden, weil diese z.B. nicht in den Hauptspeicher passen und von einer hardwaregestützten Kodiereinheit (z.B. üblicherweise in Handys mit Kamerafunktion) direkt in einen nicht flüchtigen Festspeicher (z.B. Flash, Harddisk, ...) geschrieben werden. Hierzu werden die höher aufgelösten Bilder und die aus, ggf. geringer aufgelösten, Einzelbildern ermittelten und auf die hohe Auflösung hochgerechneten Transformationen für die Überblendung gespeichert.
b) Durch die Unterbrechung der Bewegung beim Aufzeichnen des Panoramabildes können Geräte mit der automatischen Panoramafunktion unterstützt werden, bei denen es nicht möglich ist, die aufnahmegesteuerten Bilddaten direkt vom Bildsensor zu lesen und nur Viewfinder Frames zur Verfügung stellen und die wie unter a) genannt immer eine Kodiereinheit nutzen, um höheraufgelöste Bilddaten direkt zu speichern.
c) Es ist möglich, die 2D-Transformation zwischen zwei aufeinanderfolgenden Bildern anhand der höheraufgelösten Datensätze und mit mehr Verarbeitungszeit auf Basis bereits ermittelter Transformationen zu verfeinern und/oder z.B. mit Verfahren, die mehr Rechenzeit beanspruchen, neu zu berechnen.

Eine bevorzugte Variante sieht vor, die geringer aufgelösten Bilddaten (z.B. Viewfinder Frames) wie genannt für Berechnung und Vorschau und die höher auflösenden Bilddaten in einem Post-Processing zusammenzusetzen.

Das vorstehend beschriebene Aufnahmeverfahren, bei dem einem Nutzer durch ein Feedbacksignal (Audio/ visuelle Darstellung) angezeigt wird, wann die Kamerabewegung unterbrochen werden sollte, um Aufnahmen in gewünschter Qualität zu bekommen, wird durch das erfindungsgemäße Verfahren der Analyse der Bilddatensätze überhaupt erst ermöglicht, da anhand der Analyse Aussagen über die für eine Aufnahme erforderlichen Datensätze des Bildsensors getroffen werden können. In einer Ausführung wird bei der Analyse festgestellt, dass für eine Aufnahme eines anzufügenden Bildes die Kamerabewegung zu schnell erfolgt, wird dies dem Nutzer signalisiert. Kann das dem Panorama anzufügende Bild mit der gegenwärtigen Geschwindigkeit in der vorgesehenen Qualität aufgenommen werden, erfolgt vorzugsweise keine Signalisierung.

In einer anderen bevorzugten Ausführungsform der Erfindung ist vorgesehen, dass das anzufügende Bild auch aufgenommen wird, wenn die Bewegung der Kamera nicht oder verspätet unterbrochen wird. Da in einem solchen Falle möglicherweise ein Bild geringer Qualität aufgenommen wurde, kann es in einer weiteren bevorzugten Ausführungsform nachträglich durch ein Bild besserer Qualität überschrieben werden.

In einer anderen bevorzugten Ausführungsform der Erfindung ist vorgesehen, dass der Nutzer nach verspäteter Unterbrechung der Bewegung zu einer gegensätzlichen Bewegung aufgefordert wird, um doch noch einen Datensatz höherer Qualität aufzunehmen.

In einer anderen bevorzugten Ausführungsform der Erfindung ist vorgesehen, dass bei einer detektierten Schwäche in der Bildqualität, z.B. Bewegungsunschärfe, zu einer gegensätzlichen Bewegung aufgefordert wird, um doch noch einen Datensatz höherer Qualität aufzunehmen.

Ein weiterer besonderer Vorteil des erfindungsgemäßen Verfahrens besteht darin, dass gegenüber einer herkömmlichen Datenanalyse im Nachhinein nicht alle gelesenen Datensätze gespeichert werden müssen. Solange die Analyse der gelesenen Datensätze ergibt, dass ein gelesener Datensatz noch nicht zu den bereits gespeicherten hinzugefügt werden soll, muss dieser Datensatz auch nicht gespeichert werden. So ist es beispielsweise möglich, dass die Überlappung des aktuell gelesenen Datensatzes mit dem bereits gespeicherten Bild noch weite Bildbereiche umfasst und die Analyse ergibt, dass die Überlappung des bereits gespeicherten Bildes mit dem nachfolgend gelesene Datensatz auch noch die Generierung des Panoramabildes ermöglicht; dann kann der vorangehende Datensatz verworfen werden. Der nachfolgende Datensatz wird gegebenenfalls gespeichert - falls nicht der auf ihn folgende für die Zusammenstellung des Panoramas besser geeignet ist. Durch dieses Vorgehen kann der erforderliche Speicherplatz erheblich reduziert werden.

Um den Fortschritt bei der Erzeugung eines Panoramabildes beurteilen zu können, ist in einer anderen bevorzugten Ausführungsform vorgesehen, die Entstehung des Panoramabildes permanent und/oder als Echtzeitvorschau auf einem visuellen Ausgabemittel, vorzugsweise einem Display oder Bildschirm der Aufnahmevorrichtung, anzuzeigen. Eine solche Echtzeitvorschau unterstützt die Benutzung der Erfindung, da der Nutzer durch die Echtzeitvorschau den Aufnahmevorgang beobachten und so beispielsweise die Geschwindigkeit seiner manuellen Bewegung anpassen kann, um ein optimales Ergebnis zu erhalten.

Ein Computerprogramm zur Behandlung von Datensätzen bildgebender Sensoren ermöglicht es einer Datenverarbeitungseinrichtung, nachdem es in den Speicher der Datenverarbeitungseinrichtung geladen worden ist, ein Verfahren zur Behandlung von Datensätzen bildgebender Sensoren durchzuführen, wobei
mehrere aufeinanderfolgende Datensätze eines bildgebenden Sensors zumindest teilweise gelesen werden,
gelesene Datensätze analysiert werden, um einander entsprechende Bereiche innerhalb der gelesenen Datensätze zu ermitteln, und
- Daten mehrerer aufeinanderfolgender Datensätze zusammen mit Informationen über einander entsprechende Bereiche und/oder
- Daten mehrerer aufeinanderfolgender Datensätze in einer Datei abgespeichert und/oder
- Daten mehrerer aufeinanderfolgender Datensätze bei einer Ausgabe über Mittel zur Datenausgabe zu einem Bild zusammengefügt werden.

Solche Computerprogramme können beispielsweise (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach Anspruch 22 aus einem elektronischen Datennetz, wie beispielsweise aus dem Internet, auf eine an das Datennetz angeschlossene Datenverarbeitungseinrichtung heruntergeladen wird.

Um das erfindungsgemäße Verfahren zur Behandlung von Datensätzen bildgebender Sensoren durchzuführen, ist vorgesehen, ein computerlesbares Speichermedium einzusetzen, auf dem ein Programm gespeichert ist, das es einer Datenverarbeitungseinrichtung ermöglicht, nachdem es in den Speicher der Datenverarbeitungseinrichtung geladen worden ist, ein Verfahren zur Behandlung von Datensätzen bildgebender Sensoren durchzuführen, wobei
mehrere aufeinanderfolgende Datensätze eines bildgebenden Sensors zumindest teilweise gelesen werden,
gelesene Datensätze analysiert werden, um einander entsprechende Bereiche innerhalb der gelesenen Datensätze zu ermitteln, und
- Daten mehrerer aufeinanderfolgender Datensätze zusammen mit Informationen über einander entsprechende Bereiche und/oder
- Daten mehrerer aufeinanderfolgender Datensätze in einer Datei abgespeichert und/oder
- Daten mehrerer aufeinanderfolgender Datensätze bei einer Ausgabe über Mittel zur Datenausgabe zu einem Bild zusammengefügt werden.

Die Erfindung gestattet es beispielsweise, beim Treffen mehrerer Freunde, z.B. auf einer Party, durch einen "Rundum-Schnappschuss" alle Teilnehmer mit herkömmlichen Kameras, sei es eine Digitalkamera, ein Mobiltelefon oder ein PDA, zu photographieren. Desgleichen sind mit der Erfindung Panoramaaufnahmen von Aussichtspunkten oder Berggipfeln aus möglich; oder auch Photographien von historischen Plätzen - und zwar mit vollkommen frei wählbarem Winkel. Der Bildwinkel ist nicht einmal auf 360° eingeschränkt.

Die Aufnahme von Panoramafotos mit der Erfindung ist denkbar einfach durchzuführen: ein Schwenken des Aufnahmegerätes (Digitalkamera, Mobiltelefon o. dgl.) in dem gewünschten Winkel bei gedrücktem Auslöser ist alles, was man tun muss. Eine auf dem Aufnahmegerät installierte Software zur Steuerung des Auslesens der Bilddaten aus dem bildgebenden Sensor, zur Analyse und zum Zusammensetzen der Bilddaten zu dem Panoramabild generiert ohne weitere Nutzereingriffe das aufgenommene Panoramabild. Es handelt sich somit um ein voll automatischen Verfahren, welches vor, während oder nach der Aufnahme des Panoramabildes keine Nutzerinteraktion erfordert.

Die Erfindung wird nachfolgend unter Bezugnahme auf die Figuren der Zeichnungen an Ausführungsbeispielen näher erläutert. Es zeigt:
- Fig. 1: einen beispielhaften Ablauf bei einer Aufnahme eines Panoramabildes,
- Fig. 2: eine Darstellung von gespeicherten High-Resolution Bildern mit Überlappungsbereichen.

Nachfolgend soll die Erfindung am Beispiel einer Digitalkamera näher erläutert werden. Die Erfindung ist jedoch nicht auf dieses spezielle Ausführungsbeispiel beschränkt, sondern vielmehr sind auch Ausführungsformen der Erfindung denkbar, bei denen der bildgebende Sensor in anderen Geräten oder Instrumenten angeordnet ist.

Bei dem hier beschriebenen Ausführungsbeispiel ist der bildgebende Sensor, das kann ein CCD-Chip oder ein CMOS-Chip sein, in eine Digitalkamera integriert. In diesem Falle ist dem bildgebenden Sensor eine optische Einheit mit optischen Parametern, d.h. in diesem Falle ein Objektiv, vorgelagert, durch welche die mit der Kamera aufzunehmenden Szenen auf den bildgebenden Sensor abgebildet werden. Zur Ausführung des erfindungsgemäßen Verfahrens ist auf einer in die Digitalkamera integrierten Datenverarbeitungseinrichtung, z.B. einem Prozessor, ein Algorithmus gespeichert. Der Algorithmus steuert insbesondere das Auslesen der Bilddatensätze, die Analyse derselben, das Abspeichern und das Zusammensetzen der Teilbilder zu einem Gesamtbild.

Das Verfahren sei noch einmal kurz zusammengefasst:
1. Start: Lesen des ersten Bilddatensatzes und Speicherung (erstes Bild wird in dieser beispielhaften Ausführungsform immer für das Panorama verwendet),
2. Lesen eines weiteren Bilddatensatzes und Berechnen des Überlappungsbereiches zum letzten gespeicherten Bilddatensatz (z.B. durch 2D-Transformation/Lukas-Kanade),
3. Falls der Überlappungsbereich größer als ein vorgegebener Schwellwert ist, verwerfen des aktuellen Bilddatensatzes und weiter mit 2, andernfalls weiter mit 4,
4. Speichern das Bilddatensatzes und Einfügen durch Überblenden in das Panoramabild,
5. Ermitteln, ob Panoramaspeicher gefüllt ist oder ob mittels Auslöser die Aufnahme beendet wurde, falls ja: STOP, ansonsten weiter mit 2.

Im Allgemeinen werden in dieser beispielhaften Ausführungsform vollständige (in Bezug auf die Szene) Bilddatensätze aus dem Bildsensor gelesen. Das Verfahren kann beschleunigt werden, wenn für die Analyse geringer aufgelöste, aber vollständige Bilddatensätze verwendet werden.

Bei dem Auslesevorgang werden, ähnlich einem Film, einzelne Bilder in schneller Folge und sequentiell ausgelesen und analysiert. Dabei kann ein Bild ein vollständiger Datensatz des Sensors (Vollbild), ein Teilbild oder ein skaliertes Bild sein.

Die Datenverarbeitungseinrichtung liest dabei einen Sensordatensatz, verarbeitet diesen vorzugsweise sofort und liest anschließend den nächsten Sensordatensatz. Die Lesefrequenz, in der die Datensätze des bildgebenden Sensors gelesen werden, hängt vom Sensor und dem Datenverarbeitungssystem sowie der gewünschten Systemlast bzw. der Verarbeitungsgeschwindigkeit ab.

In einer beispielhaften Ausführungsform des erfindungsgemäßen Verfahrens umfasst die Analyse der Sensordatensätze folgende Schritte:
1. Optional die Durchführung einer projektiven Abbildung des Bildes, z.B. durch eine zylindrische Projektion;
2. Ermittlung einer 2D-Transformation zwischen zwei aufeinanderfolgenden Bilddatensätzen mittels 2D-Homographie oder einer projektiven Transformation, wobei die projektive Transformation in vereinfachter Form als Lukas-Kanade-Algorithmus ausgeführt wird;
3. Aufsummierung der 2D-Transformationen, solange bis ein bestimmter Schwellenwert erreicht wird, und nach Erreichen dieses Schwellwertes Übergang zum Schritt
4. überlappendes Überblenden des aktuellen Bildes mit dem bzw. den Vorgängerbild(ern) und Abspeichern der Daten in einen Daten- oder Festspeicher. Der abgespeicherte Bilddatensatz des (Teil-)Panoramabildes wird somit sukzessive durch die Bilddaten des jeweils aktuellen Bildes erweitert. Vorzugsweise werden alle Bilddaten des Panoramabildes in einer einzigen Datei abgespeichert.

Die Schritte des Aufnahmeprozesses, d.h. Lesen, Analysieren und Abspeichern der Bilddatensätze, wird solange fortgeführt, wie die Auslösefunktionalität aktiviert bleibt, d.h. solange bis die gewünschte Szene abgebildet ist.

In einer weiteren beispielhaften Ausführungsform des Bearbeitungsverfahrens für Bilddatensätze wird abschließend für das gesamte Panoramabild eine projektive Abbildung als Post Processing durchgeführt. Vorzugsweise erfolgt dies insbesondere, wenn die optionale projektive Abbildung des gelesenen Bilddatensatzes im oben genannten Schritt 1 nicht durchgeführt wurde.

In einer weiteren beispielhaften Ausführungsform des Bearbeitungsverfahrens für Bilddatensätze wird vor oder nach der Speicherung von hochaufgelösten Datensätzen, aber vor der Verfeinerung/Neuberechnung der Transformation für die Zusammensetzung der Datensätze und dem Zusammensetzen die projektive Abbildung für jeden einzelnen Datensatz durchgeführt. Vorzugsweise erfolgt dies insbesondere, wenn die optionale projektive Abbildung des gelesenen Bilddatensatzes im oben genannten Schritt 1 nicht durchgeführt wurde.

In einer beispielhaften Ausführungsform des erfindungsgemäßen Verfahrens ist weiterhin vorgesehen, dass die Ergebnisse des Analysealgorithmus aufgezeichnet und dazu benutzt werden, um unter Berücksichtigung der optischen Parameter des Objektivs (der optischen Einheit), vorzugsweise voll automatisch, zu ermitteln, wann ein weiteres Teilbild der Szene abgespeichert und dem bereits abgespeicherten Teilpanoramabild hinzugefügt werden muss. Die Ergebnisse der Auswertung durch den Analysealgorithmus werden weiterhin genutzt, um, vorzugsweise voll automatisch, zu ermitteln, wie die Bilddatenwerte des Bilddatensatzes des aktuellen Teilbildes an die bereits gespeicherten Teilbilder, welche das Teilpanoramabild darstellen, anzufügen sind. Nach dem Hinzfügen des letzten Bilddatensatzes zu den Bilddaten des Teilpanoramabildes liegt ein Basisdatensatz des Gesamtpanoramabildes vor. Dieser Datensatz des Gesamtpanoramabildes kann bei entsprechender Bildverarbeitung während des Analyse- und Zusammenfügungsprozesses bereits die Endfassung des gesamten Panoramabildes darstellen. Insbesondere kann dies der Fall sein, wenn für jeden eingelesenen Datensatz eines Einzelbildes die projektive Abbildung gemäß dem oben genannten Schritt 1 durchgeführt wird.

In einer anderen beispielhaften Ausführungsform ist jedoch vorgesehen, für das gesamte Panoramabild einen Nachbearbeitungsschritt auszuführen, bei dem das Panoramabild beispielsweise bezüglich Verzerrungen unter Berücksichtigung der aufgezeichneten Bewegungsdaten und der optischen Parameter des Objektivs korrigiert wird. Die Ausführung dieses Nachbearbeitungsschrittes ist besonders vorteilhaft, wenn auf dem oben genannten, optionalen Schritt 1 verzichtet wurde.

In einer weiteren beispielhaften Ausführungsform des erfindungsgemäßen Verfahrens ist außerdem vorgesehen, die aufgezeichneten Ergebnisse des Analysealgorithmus dazu zu verwenden, um fortlaufend in einer Echtzeitvorschau auf einem Display der Digitalkamera dem Nutzer den Fortschritt beim Zusammenfügen der Bilddaten zu dem Panoramabild anzuzeigen.

Eine andere beispielhafte Ausführungsform der Erfindung sieht vor, das Verfahren zur Bearbeitung von Bilddatensätzen in die Kamerafunktionalität eines Mobiltelefons, eines PDA oder auch in die Funktionalität einer Digitalkamera einzubinden. Die Software zur Steuerung der Analyse und Bearbeitung der Bilddaten ist in diesem Fall an das Betriebssystem des Mobiltelefons, des PDA oder der Digitalkamera, beispielsweise an eine oder mehrere Versionen des Betriebssystems Symbian®. angepasst. Die Software wird dann vorzugsweise im Kameramodus des Gerätes gestartet. Eine solche Einbindung gestattet es insbesondere, auch für Panoramabilder auf den vollen Funktionsumfang der jeweiligen Kamerafunktion zuzugreifen. Damit lassen sich insbesondere Auswahlmöglichkeiten für eine gewünschte Auflösung, Browser für das Durchblättern einer Fotogalerie, die Zoom-Funktion sowie Datenübertragungsfunktionen zwischen dem mobilen Endgerät und einer externen Speichereinheit, wie etwa einer Speicherkarte, oder anderen Datenverarbeitungseinrichtungen, wie z.B. einen PC, in einfacher Weise auch für Panoramabilder nutzen.

In einer anderen beispielhaften Ausführungsform ist das Verfahren zur Bearbeitung von Bilddatensätzen in die Kamerafunktionalität eines Mobiltelefons integriert. Es ist dabei vorgesehen, die Aufnahme eines Panoramafotos durch das kurze Drücken eines Joysticks gestartet wird. Das erste aufgenommene Bild erscheint anschließend auf dem Display oder Screen des Mobiltelefons. Bei Bewegung des Mobiltelefons nach links, recht oder aber auch in vertikale Richtung werden nachfolgende Bilder diesem ersten Bild hinzugefügt. Auch auf dem Display oder Screen wird dieser Fortschritt in der Entstehung des Panoramafotos sichtbar gemacht. Das Panoramafoto vergrößert sich um die jeweils hinzugefügten Bilddaten. Wenn die Aufnahme des Panoramafotos beendet werden soll, muss in dieser beispielhaften Ausführungsform der Joystick ein zweites Mal kurz gedrückt werden. In einer anderen beispielhaften Ausführungsform der Erfindung endet der Aufnahmevorgang jedoch automatisch, wenn die maximale Panoramagröße, z. B. 360°, erreicht wird.

Nachdem die Aufnahme des Panoramafotos beendet ist, kann der Nutzer das Bild sofort um 90° drehen, wenn er ein Hochkant-Panoramafoto aufgenommen hat. Außerdem kann er alle Funktionen, welche der Kameramodus des Mobiltelefons bereitstellt, nutzen, er kann beispielsweise in das Panoramafoto hineinzoomen, um zu prüfen, ob es seinen Erwartungen an Qualität oder Motivdetails entspricht.

Für die Navigation in einem Panoramafoto ist in einer beispielhaften Ausführungsform die Verwendung der Telefontastatur vorgesehen. So kann eine Funktionsbelegung der Tasten beispielsweise folgendermaßen aussehen:
Zifferntaste ,5':
   Ansicht eines Panoramafotos in voller Auflösung, d.h.: ein Pixel des Bildes entspricht einem Pixel des Displays oder Screens;
   Zifferntasten ,1', ,2', ,3', ,4', ,6', ,7', ,8' und ,9': Verschieben des Panoramafotos in die Richtung, die der Lage der benutzten Zifferntaste auf dem Tastaturblock relativ zu Zifferntaste ,5' entspricht, also: Drücken der Zifferntaste '3' macht eine Ausschnitt des Panoramafotos sichtbar, der links oberhalb des aktuell auf dem Display oder Screen dargestellten Ausschnitt liegt;
Zifferntaste '0':
   Anzeigen des gesamten Panoramafotos;
Tasten '*' und ,#':
   schrittweises Vergrößern bzw. Verkleinern.

Eine andere beispielhafte Ausführungsform der Erfindung sieht vor, nicht nur horizontale oder vertikale Panoramafotos, sondern auch "Posterformate" zu erzeugen. In diesem Fall wird die Kamera beispielsweise einmal horizontal (vertikal) in eine Richtung geschwenkt und anschließend, ohne den Aufzeichnungsvorgang zu unterbrechen, höhenversetzt in entgegengesetzter Richtung zurückgeschwenkt, so dass sozusagen dem im ersten Schwenk erzeugten Panoramafoto ein zweites Panoramafoto oben bzw. unten angefügt wird. Diese Schwenks können auch mehrfach mäanderartig wiederholt werden.

Im Folgenden soll das Post-Processing näher beschrieben werden:

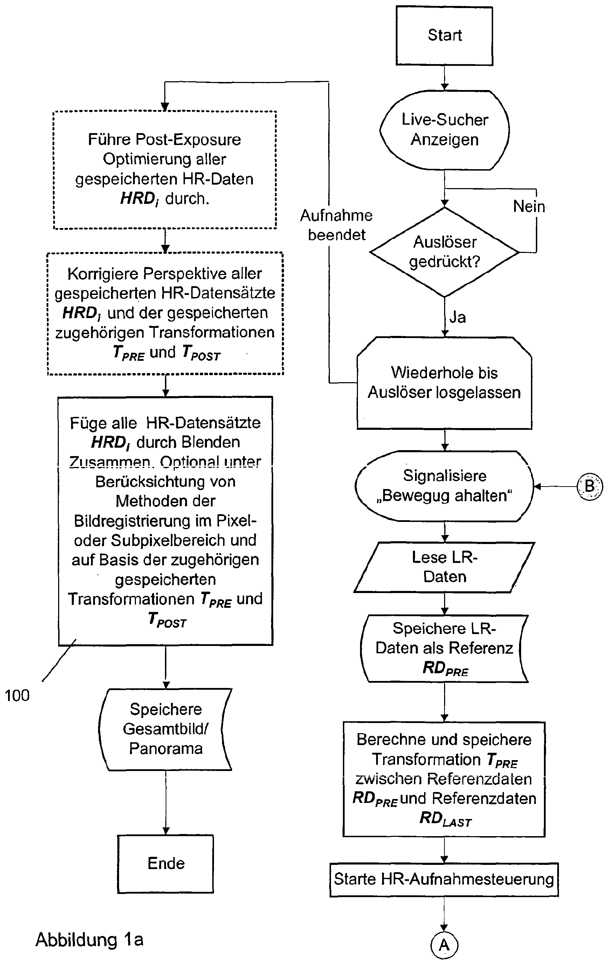

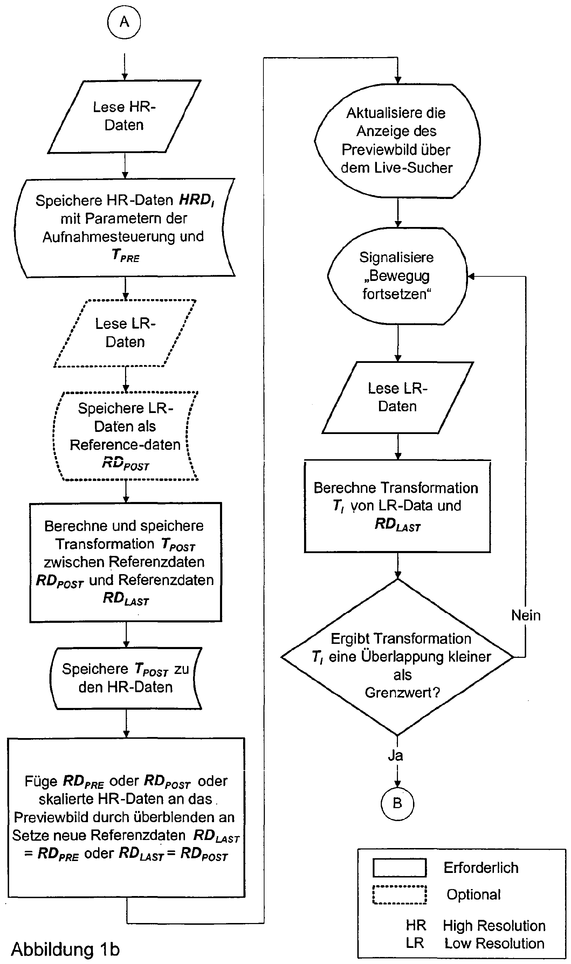

Abbildungen 1a und 1b stellen eine beispielhafte Ausführungsform zur Realisierung eines High-Resolution-Stitching mit Post-Processing dar.

Es werden für ein Post-Processing sämtliche Aufnahmeparameter (z.B. Belichtungszeit, Empfindlichkeitseinstellung, Weißabgleich, u.a.) gespeichert (in vielen Geräten geschieht z.B. das sogar automatisch in Form von Metadaten im EXIF Format, auf die zur Ausführung des erfindungsgemäßen Verfahrens zurückgegriffen werden kann). Das beispielhafte High-Resolution-Stitching mit Post-Processing ermöglicht die Unterstützung einer zusammengesetzten Auflösung, die nicht im flüchtigen Speicher gehalten werden kann, durch Einsatz speicheroptimierter Verfahren wie beispielsweise blockweiser Bearbeitung der Einzelbilder in hoher Auflösung.

Es ermöglicht weiter die perspektivische Korrektur auf den Einzelbildern oder dem Gesamtbild, sowie einen Abgleich von Kontrast, Helligkeit und Weißabgleich durch Auswertung der bei der vorzugsweise vollständigen Aufnahmesteuerung für jedes Einzelbild ermittelten und gespeicherten Parameter der Aufnahmesteuerung wie z.B. Empfindlichkeit, Belichtungszeit, Blende, Weißabgleich, Farbeinstellung sowie durch Auswertung der Bildinformationen in sich überlappenden Bereichen, die gleiche Szeneabschnitte mit möglicherweise unterschiedlichen Aufnahmeparametern der vorzugsweise vollständigen Aufnahmesteuerung abbilden.

### Post-Exposure-Correction

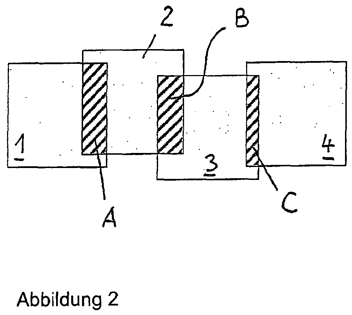

Abbildung 2 stellt die gespeicherten High-Resolution Bilder 1-4 sowie ihre ermittelten Überlappungsbereiche A-C zu Zeitpunkt der optionalen Bildanpassung und vor dem Blending in ein einzigen Panoramabild dar (siehe 100 in Abbildung 1a). Zu den einzelnen Bildern 1-4 sind Aufnahmeparameter der vorzugsweise vollständigen Aufnahmesteuerung (wie beispielsweise Belichtungszeit, Blende, Empfindlichkeits-/ISO-Einstellung, Weißabgleich etc.) gespeichert (z.B. in den EXIF Metadaten, welche durch automatische Codiereinheiten mit in JPEG-Dateien geschrieben werden).

Bereich A definiert identische Bildinhalte mit Aufnahmeparametern von Bild 1 sowie Bild 2; analoges gilt für die folgenden Bilder und die respektiven Bereiche B und C.

Zum Abgleich der Bilder wird jetzt anhand der Informationen aus den Aufnahmeparametern eine sinnvolle Reihenfolge des paarweisen Abgleichs in der Form gebildet, dass in der Gesamtheit der Einzelbilder eine möglichst geringe Korrektur erfolgt.

Ein Einzelbild wird bezogen auf ein Nachbarbild korrigiert, indem durch Analyse des überlappenden Bereichs in beiden Bildern (z.B. durch Histogrammanalyse oder durch andere Anaylseverfahren) eine Transformation bzgl. der zu korrigierenden Parameter (z.B. Kontrast, Helligkeit, ...) ermittelt wird.

Analog wird mit der Anpassung bei unterschiedlichem Weißabgleich der Einzelbilder verfahren. Sind keine genauen Informationen (z.B. berücksichtigte Licht-Farbtemperaturwerte) zum Weißabgleich in den Aufnahmeparametern vorhanden, wird die Reihenfolge durch Analyse der Überlappungsbereich A-C und Berechnung der Korrektur für jedes Bildpaar so gebildet, dass eine möglichst geringe Anpassung aller Einzelbilder notwendig wird.

## Patentansprüche

1. Verfahren zur Behandlung von Datensätzen bildgebender Sensoren, bei dem
- mehrere aufeinanderfolgende Datensätze (1, 2, 3, 4) eines bildgebenden Sensors zumindest teilweise gelesen werden,
- während des Lesens weiterer Datensätze gelesene Datensätze (1, 2, 3, 4) analysiert werden, um einander entsprechende Bereiche (A, B, C) innerhalb der gelesenen Datensätze (1, 2, 3, 4) zu ermitteln,
- Daten mehrerer aufeinanderfolgender Datensätze (1, 2, 3, 4) zusammen mit Informationen über einander entsprechende Bereiche (A, B, C) abgespeichert werden und
- die gespeicherten Daten mehrerer Datensätze (1, 2, 3, 4) sukzessive zu einem zusammengesetzten Bild zusammengefügt werden,
- wobei Datensätze (1, 2; 2, 3; 3, 4) mit einem einander entsprechenden Bereich (A; B; C) einander vor dem Zusammenfügen bezüglich unterschiedlicher Aufnahmeparameter paarweise angepasst werden,
- wobei die Anpassungen auf Grundlage einer Auswertung der ermittelten, einander entsprechenden Bereiche (A, B, C) von Datensätzen (1, 2, 3, 4) und von für die einzelnen Datensätze (1, 2, 3, 4) verwendeten Aufnahmeparametern erfolgen,
- wobei die Aufnahmeparameter mindestens einen der folgenden Parameter umfassen: Belichtungszeit, Empfindlichkeitseinstellung, Weißabgleich, und Farbeinstellung, und
- wobei die Datensätze (1, 2; 2, 3; 3, 4) für die paarweisen Anpassungen in einer anhand der Aufnahmeparameter bestimmten, derartigen Reihenfolge ausgewählt werden, dass die Stärke der Anpassungen über alle Datensätze (1, 2, 3, 4) minimal ist.

2. Verfahren nach Anspruch 1,
**dadurch gekennzeichnet, dass**
solche Datensätze (1, 2, 3, 4) zu einem Bild zusammengefügt werden, welche während einer einmaligen dauerhaften Aktivierung einer Auslösefunktion gelesen wurden.

3. Verfahren nach einem der Ansprüche 1 oder 2,
**dadurch gekennzeichnet, dass**
eine Signalisierung erfolgt, wenn ein weiterer Datensatz dem zusammengesetzten Bild hinzugefügt werden soll.

4. Verfahren nach einem der Ansprüche 1 bis 3,
**dadurch gekennzeichnet, dass**
die Analyse gelesener Datensätze (1, 2, 3, 4) eine Ermittlung einer 2D-Transformation zwischen aufeinanderfolgenden Datensätzen (1, 2; 2, 3; 3, 4) umfasst.

5. Verfahren nach einem der Ansprüche 1 bis 4,
**dadurch gekennzeichnet, dass**
die Analyse gelesener Datensätze (1, 2, 3, 4) folgende Schritte umfasst:
- Ermittlung, wann ein weiteres Teilbild einer durch den bildgebenden Sensor detektierten Szene gespeichert werden muss, und/oder
- Zusammenfügen mehrerer Teilbilder zu einer Szene.

6. Verfahren nach einem der Ansprüche 1 bis 5,
**dadurch gekennzeichnet, dass**
die durch die gespeicherten Daten dargestellte Szene permanent visuell ausgegeben wird.

7. Verfahren nach einem der Ansprüche 1 bis 6,
**dadurch gekennzeichnet, dass**
der Analyse Datensätze (1, 2, 3, 4) mit einer ersten Auflösung zugrunde gelegt werden und einem zusammengesetzten Bild Datensätze mit einer zweiten, höheren Auflösung zugrunde gelegt werden, wobei zum Erhalten mindestens eines der Datensätze für das zusammengesetzte Bild eine Rückmeldung an einen Nutzer ausgegeben wird, wobei die Rückmeldung den Nutzer zum Stoppen einer Bewegung einer den Sensor umfassenden Anordnung auffordert, oder den Nutzer zum Fortsetzen einer Bewegung einer den Sensor umfassenden Anordnung auffordert, oder den Nutzer zu einer gegensätzlichen Bewegung zu einer zuvor durchgeführten Bewegung einer den Sensor umfassenden Anordnung auffordert.

8. Anordnung zur Durchführung eines Verfahrens zur Behandlung von Datensätzen bildgebender Sensoren, wobei die Anordnung mindestens einen bildgebenden Sensor und mindestens eine Datenverarbeitungseinrichtung umfasst und derart eingerichtet ist, dass mehrere aufeinanderfolgende Datensätze (1, 2, 3, 4) eines bildgebenden Sensors zumindest teilweise gelesen werden, dass während des Lesens weiterer Datensätze gelesene Datensätze (1, 2, 3, 4) analysiert werden, um einander entsprechende Bereiche (A, B, C) innerhalb der gelesenen Datensätze (1, 2, 3, 4) zu ermitteln, dass Daten mehrerer aufeinanderfolgender Datensätze (1, 2, 3, 4) zusammen mit Informationen über einander entsprechende Bereiche (A, B, C) abgespeichert werden, und dass die gespeicherten Daten mehrerer Datensätze (1, 2, 3, 4) sukzessive zu einem zusammengesetzten Bild zusammengefügt werden, wobei Datensätze (1, 2; 2, 3; 3, 4) mit einem einander entsprechenden Bereich (A; B; C) einander vor dem Zusammenfügen bezüglich unterschiedlicher Aufnahmeparameter paarweise angepasst werden, wobei die Anpassungen auf Grundlage einer Auswertung der ermittelten, einander entsprechenden Bereiche (A, B, C) von Datensätzen (1, 2, 3, 4) und von für die einzelnen Datensätze (1, 2, 3, 4) verwendeten Aufnahmeparametern erfolgen, wobei die Aufnahmeparameter mindestens einen der folgenden Parameter umfassen: Belichtungszeit, Empfindlichkeitseinstellung, Weißabgleich und Farbeinstellung, und wobei die Datensätze (1, 2; 2, 3; 3, 4) für die paarweisen Anpassungen in einer anhand der Aufnahmeparameter bestimmten, derartigen Reihenfolge ausgewählt werden, dass die Stärke der Anpassungen über alle Datensätze (1, 2, 3, 4) minimal ist.

9. Anordnung nach Anspruch 8,
**dadurch gekennzeichnet, dass**
der Analyse Datensätze (1, 2, 3, 4) mit einer ersten Auflösung zugrunde gelegt werden und einem zusammengesetzten Bild Datensätze mit zweiten, höheren Auflösung zugrunde gelegt werden, wobei zum Erhalten mindestens eines der Datensätze für das zusammengesetzte Bild eine Rückmeldung an einen Nutzer ausgegeben wird, wobei die Rückmeldung den Nutzer zum Stoppen einer Bewegung einer den Sensor umfassenden Anordnung auffordert, oder den Nutzer zum Fortsetzen einer Bewegung einer den Sensor umfassenden Anordnung auffordert, oder den Nutzer zu einer gegensätzlichen Bewegung zu einer zuvor durchgeführten Bewegung einer den Sensor umfassenden Anordnung auffordert.

10. Anordnung nach Anspruch 8 oder 9,
**dadurch gekennzeichnet, dass**
die Anordnung
- mindestens eine optische Einheit zur Abbildung von Szenen auf den mindestens einen bildgebenden Sensor,
- mindestens eine Aktivierungseinheit umfasst, zur Aktivierung des Lesens der Datensätze (1, 2, 3, 4) des mindestens einen bildgebenden Sensors und/oder
- mindestens ein Mittel zur visuellen Ausgabe von durch den mindestens einen bildgebenden Sensor erfassten Bilddaten
umfasst.

11. Anordnung nach einem der Ansprüche 8 bis 10,
**dadurch gekennzeichnet, dass**
der mindestens eine bildgebende Sensor in ein mobiles Endgerät integriert ist.

12. Computerprogramm, das es einem Computer ermöglicht, nachdem es in den Speicher des Computers geladen worden ist, ein Verfahren zur Behandlung von Datensätzen bildgebender Sensoren durchzuführen, wobei mehrere aufeinanderfolgende Datensätze (1, 2, 3, 4) eines bildgebenden Sensors zumindest teilweise gelesen werden, während des Lesens weiterer Datensätze gelesene Datensätze (1, 2, 3, 4) analysiert werden, um einander entsprechende Bereiche (A, B, C) innerhalb der gelesenen Datensätze (1, 2, 3, 4) zu ermitteln, wobei Daten mehrerer aufeinanderfolgender Datensätze (1, 2, 3, 4) zusammen mit Informationen über einander entsprechende Bereiche abgespeichert werden, wobei die gespeicherten Daten mehrerer Datensätze (1, 2, 3, 4) sukzessive zu einem zusammengesetzten Bild zusammengefügt werden, wobei Datensätze (1, 2; 2, 3; 3, 4) mit einem einander entsprechenden Bereich (A; B; C;) einander vor dem Zusammenfügen bezüglich unterschiedlicher Aufnahmeparameter paarweise angepasst werden, wobei die Anpassungen auf Grundlage einer Auswertung der ermittelten, einander entsprechenden Bereiche (A, B, C) von Datensätzen (1, 2, 3, 4) und von für die einzelnen Datensätze (1, 2, 3, 4) verwendeten Aufnahmeparametern erfolgen, wobei die Aufnahmeparameter mindestens einen der folgenden Parameter umfassen: Belichtungszeit, Empfindlichkeitseinstellung, Weißabgleich und Farbeinstellung, und wobei die Datensätze (1, 2; 2, 3; 3, 4) für die paarweisen Anpassungen in einer anhand der Aufnahmeparameter bestimmten, derartigen Reihenfolge ausgewählt werden, dass die Stärke der Anpassungen über alle Datensätze (1, 2, 3, 4) minimal ist.

13. Verfahren, bei dem ein Computerprogramm nach Anspruch 12 aus einem elektronischen Datennetz, wie beispielsweise aus dem Internet, auf eine an das Datennetz angeschlossene Datenverarbeitungseinrichtung heruntergeladen wird.

## Claims

1. Method for the processing of records of imaging sensors, in which
- several successive records (1, 2, 3, 4) of an imaging sensor are read at least in part,
- records read during reading of additional records (1, 2, 3, 4) are analysed in order to determine matching areas (A, B, C) within the read records (1, 2, 3, 4),
- data of several successive records (1, 2, 3, 4) are stored together with information about matching areas (A, B, C) and
- the stored data of several records (1, 2, 3, 4) are successively combined into a composite image,
- wherein records (1, 2; 2, 3; 3, 4) with a matching area (A; B; C) are adjusted in pairs to each other with respect to different recording parameters before being combined,
- wherein the adjustments are made on the basis of an evaluation of the determined matching areas (A, B, C) of records (1, 2, 3, 4) and of recording parameters used for the individual records (1, 2, 3, 4),
- wherein the recording parameters comprise at least one of the following parameters: exposure time, sensitivity setting, white balance, and colour adjustment, and
- wherein the records (1, 2; 2, 3; 3, 4) are selected for the pairwise adjustments in a sequence determined by means of the recording parameters in such a manner that the strength of the adjustments over all records (1, 2, 3, 4) is minimal.

2. Method according to Claim 1,
**characterised in that**
such records (1, 2, 3, 4) are combined into one image, which were read during a single permanent activation of a triggering function.

3. Method according to any one of Claims 1 or 2,
**characterised in that**
a signalling occurs, if a further record should be added to the composite image.

4. Method according to any one of Claims 1 to 3,
**characterised in that**
the analysis of read records (1, 2, 3, 4) comprises a determination of a 2D transformation between successive records (1, 2; 2, 3; 3, 4).

5. Method according to any one of Claims 1 to 4,
**characterised in that**
the analysis of read records (1, 2, 3, 4) comprises the following steps:
- determining when a further partial image of a scene detected by the imaging sensor must be stored, and/or
- combining several partial images into one scene.

6. Method according to any one of Claims 1 to 5,
**characterised in that**
the scene depicted by the stored data is continuously visually outputted.

7. Method according to any one of Claims 1 to 6,
**characterised in that**
the analysis is based on records (1,2, 3, 4) with a first resolution and a composite image is based on records with a second, higher resolution, wherein to obtain at least one of the records for the composite image a feedback is outputted to a user, wherein the feedback prompts the user to stop a movement of an assembly comprising the sensor, or the user to continue a movement of an assembly comprising the sensor, or prompts the user to make a movement opposite to the previously performed movement of an assembly comprising the sensor.

8. Assembly for implementing a method for processing records of imaging sensors, wherein the assembly comprises at least one imaging sensor and at least one data processing device and is configured in such a manner that several successive records (1, 2, 3, 4) of an imaging sensor are read at least in part, that during the reading of further records read records (1, 2, 3, 4) are analysed, in order to determine matching areas (A, B, C) within the read records (1, 2, 3, 4), that data of several successive records (1, 2, 3, 4) are stored together with information on matching areas (A, B, C), and that the stored data of several records (1, 2, 3, 4) are successively combined into a composite image, wherein records (1, 2; 2, 3; 3, 4) with a matching area (A; B; C) are adjusted in pairs to each other with respect to different recording parameters before being combined, wherein the adjustments are made on the basis of an evaluation of the determined matching areas (A, B, C) of records (1, 2, 3, 4) and of recording parameters used for the individual records (1, 2, 3, 4), wherein the recording parameters comprise at least one of the following parameters: exposure time, sensitivity setting, white balance, and colour adjustment, and wherein the records (1, 2; 2, 3; 3, 4) are selected for the pairwise adjustments in a sequence determined by means of the recording parameters in such a manner that the strength of the adjustments over all records (1, 2, 3, 4) is minimal.

9. Assembly according to Claim 8,
**characterised in that**
the analysis is based on records (1, 2, 3, 4) with a first resolution and a composite image is based on records with second, higher resolution, wherein to obtain at least one of the records for the composite image a feedback is outputted to a user, wherein the feedback prompts the user to stop a movement of an assembly comprising the sensor, or prompts the user to continue a movement of an assembly comprising the sensor, or prompts the user to make a movement opposite to a previously performed movement of an assembly comprising the sensor.

10. Assembly according to Claim 8 or 9,
**characterised in that**
the assembly comprises
- at least one optical unit for imaging scenes on the at least one imaging sensor,
- at least one activation unit for activation of the reading of the records (1, 2, 3, 4) of the at least one imaging sensor and/or
- at least one means for the visual output of image data sensed by the at least one imaging sensor.

11. Assembly according to any one of Claims 8 to 10,
**characterised in that**
the at least one imaging sensor is integrated into a mobile terminal.

12. Computer program, which enables a computer, after it has been loaded into the memory of the computer, to implement a method for the processing of records of imaging sensors, wherein several successive records (1, 2, 3, 4) of an imaging sensor are read at least in part, during the reading of further records read records (1, 2, 3, 4) are analysed, in order to determine matching areas (A, B, C) within the read records (1, 2, 3, 4), wherein data of several successive records (1, 2, 3, 4) are stored together with information on matching areas, wherein the stored data of several records (1, 2, 3, 4) are combined successively into a composite image, wherein records (1, 2; 2, 3; 3, 4) with a matching area (A; B; C) are adjusted in pairs to each other with respect to different recording parameters before being combined, wherein the adjustments are made on the basis of an evaluation of the determined matching areas (A, B, C) of records (1, 2, 3, 4) and of recording parameters used for the individual records (1, 2, 3, 4), wherein the recording parameters comprise at least one of the following parameters: exposure time, sensitivity setting, white balance, and colour adjustment, and wherein the records (1, 2; 2, 3; 3, 4) are selected for the pairwise adjustments in a sequence determined by means of the recording parameters in such a manner that the strength of the adjustments over all records (1, 2, 3, 4) is minimal.

13. Method, in which a computer program according to Claim 12 is downloaded from an electronic data network, such as, for example, from the Internet, to a data processing device connected to the data network.

## Revendications

1. Procédé de traitement de jeux de données de capteurs générateurs d'images, dans lequel
- plusieurs jeux de données successifs (1, 2, 3, 4) d'un capteur générateur d'images sont lus au moins partiellement,
- pendant la lecture d'autres jeux de données, les jeux de données lus (1, 2, 3, 4) sont analysés afin de de déterminer les zones se correspondant (A, B, C) dans les jeux de données lus (1, 2, 3, 4),
- les données de plusieurs jeux de données successifs (1, 2, 3, 4) sont sauvegardées avec des informations concernant les zones se correspondant (A, B, C) et
- les données enregistrées de plusieurs jeux de données (1, 2, 3, 4) sont regroupées successivement en une image composée,
- les jeux de données (1, 2, 3, 4) comportant une zone se correspondant (A, B, C) sont adaptés les uns aux autres avant le regroupement en ce qui concerne différents paramètres d'enregistrement,
- les adaptations ayant lieu sur la base d'une évaluation des zones se correspondant déterminées (A, B, C) des jeux de données (1, 2, 3, 4) et des paramètres d'enregistrement utilisés pour les jeux de données (1, 2, 3, 4) individuels,
- les paramètres d'enregistrement comprenant au moins un des paramètres suivants : durée d'exposition, réglage de sensibilité, balance des blancs et réglage de couleurs, et
- les jeux de données (1, 2, 3, 4) pour les adaptations par paires étant sélectionnés dans un ordre défini en fonction des paramètres d'enregistrement de manière à ce que l'intensité des adaptations soit minimale sur tous les jeux de données (1, 2, 3, 4).

2. Procédé selon la revendication 1,
**caractérisé en ce que**
sont regroupés en une image les jeux de données (1, 2, 3, 4) qui ont été lus pendant une activation durable ayant eu lieu une seule fois d'une fonction de déclenchement.

3. Procédé selon une des revendications 1 ou 2,
**caractérisé en ce**
**qu'**il y a une signalisation si un autre enregistrement de l'image composée doit être ajouté.

4. Procédé selon une des revendications 1 à 3,
**caractérisé en ce que**
l'analyse des jeux de données lus (1, 2, 3, 4) comprend une détermination d'une transformation 2D entre des jeux de données successifs (1, 2, 3, 4).

5. Procédé selon une des revendications 1 à 4,
**caractérisé en ce que**
l'analyse des jeux de données lus (1, 2, 3, 4) comprend les étapes suivantes :
- détermination du moment où une autre sous-image d'une scène détectée par le capteur générateur d'images doit être enregistrée, et/ou
- regroupement de plusieurs sous-images en une scène.

6. Procédé selon une des revendications 1 à 5,
**caractérisé en ce que**
la scène représentée par les données enregistrées est éditée visuellement de manière permanente.

7. Procédé selon une des revendications 1 à 6,
**caractérisé en ce que**
sont pris pour base de l'analyse des jeux de données (1, 2, 3, 4) ayant une première définition et sont pris pour base d'une image composée des jeux de données ayant une seconde définition supérieure, sachant que, pour obtenir au moins un des jeux de données pour l'image composée, un message est envoyé à un utilisateur, le message demandant à l'utilisateur d'arrêter un mouvement d'un dispositif comprenant le capteur ou demandant à l'utilisateur de poursuivre un mouvement d'un dispositif comprenant le capteur ou demandant à l'utilisateur de faire un mouvement opposé à un mouvement exécuté précédemment d'un dispositif comprenant le capteur.

8. Dispositif de réalisation d'un procédé de traitement de jeux de données de capteurs générateurs d'images, ce dispositif comprenant au moins un capteur générateur d'images et un dispositif de traitement de données et étant conçu de manière à ce que plusieurs jeux de données successifs (1, 2, 3, 4) d'un capteur générateur d'images soient lus au moins partiellement afin de que, pendant la lecture d'autres jeux de données, les jeux de données lus (1, 2, 3, 4) soient analysés pour déterminer des zones se correspondant (A, B, C) dans les jeux de données lus (1, 2, 3, 4), que les données des plusieurs jeux de données successifs (1, 2, 3, 4) soient enregistrées avec des informations sur les zones se correspondant (A, B, C) et que les données enregistrées de plusieurs jeux de données (1, 2, 3, 4) soient successivement regroupées en une image composée, que les jeux de données (1 ; 2 ; 2, 3 ; 3, 4) comportant une zone se correspondant (A, B, C) soient adaptés par paires les uns aux autres avant le regroupement au niveau de différents paramètres d'enregistrement, les adaptations ayant lieu sur la base d'une évaluation des zones se correspondant (A, B, C) déterminées d'enregistrements (1, 2, 3, 4) et des paramètres d'enregistrement utilisés pour les jeux de données (1, 2, 3, 4) individuels, les paramètres d'enregistrement comprenant au moins un des paramètres suivants : durée d'exposition, réglage de sensibilité, balance des blancs et réglage de couleurs, et les jeux de données (1, 2 ; 2, 3 ; 3, 4) pour les adaptations par paires étant sélectionnés dans un ordre défini en fonction des paramètres d'enregistrement de manière à ce que l'intensité des adaptations soit minimale sur tous les jeux de données (1, 2, 3, 4).

9. Dispositif selon la revendication 8,
**caractérisé en ce que** sont pris pour base de l'analyse des jeux de données (1, 2, 3, 4) ayant une première définition et sont pris pour base d'une image composée des jeux de données ayant une seconde définition supérieure, sachant que, pour obtenir au moins un des jeux de données pour l'image composée, un message est envoyé à un utilisateur, le message demandant à l'utilisateur d'arrêter un mouvement d'un dispositif comprenant le capteur ou demandant à l'utilisateur de poursuivre un mouvement d'un dispositif comprenant le capteur ou demandant à l'utilisateur de faire un mouvement opposé à un mouvement exécuté précédemment d'un dispositif comprenant le capteur.

10. Dispositif selon la revendication 8 ou 9,
**caractérisé en ce que**
le dispositif comprend
- au moins une unité optique pour représenter des scènes sur l'au moins un capteur générateur d'images,
- au moins une unité d'activation pour activer la lecture des jeux de données (1, 2, 3, 4) de l'au moins un capteur générateur d'images et/ou
- au moins un moyen d'édition visuelle de données graphiques enregistrées par l'au moins un capteur générateur d'images.

11. Dispositif selon une des revendications 8 à 10,
**caractérisé en ce que**
l'au moins un capteur générateur d'images est un terminal mobile.

12. Programme informatique qui permet à un ordinateur, une fois qu'il a été chargé dans la mémoire de l'ordinateur, d'exécuter un procédé de traitement d'enregistrements de capteurs générateurs d'images, plusieurs jeux de données successifs (1, 2, 3, 4) d'un capteur générateur d'images étant lus, étant analysés pendant la lecture d'autres jeux de données (1, 2, 3, 4) afin de déterminer des zones se correspondant (A, B, C) dans les jeux de données lus (1, 2, 3, 4), les données de plusieurs jeux de données successifs (1, 2, 3, 4) étant enregistrées avec des informations sur les zones se correspondant, et les données enregistrées de plusieurs jeux de données (1, 2, 3, 4) étant regroupées successivement en une image composée, les jeux de données (1 ; 2 ; 2, 3 ; 3, 4) comportant une zone se correspondant (A, B, C) étant adaptés par paires les uns aux autres avant le regroupement au niveau de différents paramètres d'enregistrement, les adaptations ayant lieu sur la base d'une évaluation des zones se correspondant (A, B, C) déterminées d'jeux de données (1, 2, 3, 4) et des paramètres d'enregistrement utilisés pour les jeux de données (1, 2, 3, 4) individuels, les paramètres d'enregistrement comprenant au moins un des paramètres suivants : durée d'exposition, réglage de sensibilité, balance des blancs et réglage de couleurs, et les jeux de données (1, 2 ; 2, 3 ; 3, 4) pour les adaptations par paires étant sélectionnés dans un ordre défini en fonction des paramètres d'enregistrement de manière à ce que l'intensité des adaptations soit minimale sur tous les jeux de données (1, 2, 3, 4).

13. Procédé dans lequel un programme informatique selon la revendication 12 est téléchargé dans un réseau de données électroniques, comme par exemple sur Internet, sur un dispositif de traitement de données raccordé au réseau de données.
